# EUROPEAN PATENT APPLICATION

(11) **EP 1 997 682 A1**
(43) Date of publication of application: **03.12.2008**
(21) Application number: 08009734.8
(22) Date of filing: 28.05.2008
(51) Int. Cl.: B60R 1/074

(54) **Vehicle outside mirror device**

(30) Priority: 31.05.2007 JP 2007144528
(71) Applicant: ICHIKOH INDUSTRIES, LTD., Shinagawa-ku, Tokyo 141-8627 (JP)
(72) Inventor: Onuki, Hiroyasu, Isehara-shi Kanagawa-ken 259-1192 (JP)
(74) Representative: Grünecker, Kinkeldey, Stockmair & Schwanhäusser Anwaltssozietät

(57) **Abstract**

In a vehicle outside mirror device, a gear case (11) of a casing (11, 12) has an engagement portion (40) with which a shaft bearing member (16) engages so as not to be movable in a direction orthogonal to an axial direction of a shaft (10). In addition, the gear case (11) and a cover (12) of the casing include a fixation portion (41, 42) that sandwiches the shaft bearing member in the axial direction of the shaft and fixes the shaft bearing member.

## Description

### BACKGROUND OF THE INVENTION

### 1. Field of the Invention

The present invention relates to a vehicle outside mirror device.

### 2. Description of the Related Art

Vehicle outside mirror devices are known in the art. A conventional vehicle outside mirror device has been disclosed in Japanese Patent Application Laid-open No. 2002-274266. The vehicle outside mirror device disclosed in Japanese Patent Application Laid-open No. 2002-274266 includes a door mirror main body, an electronic folding unit, and a door mirror stay. The electronic folding unit includes a drive motor and a rotational force transmitting mechanism that are housed in a gear cover and a case via a motor base. When the drive motor is driven, it generates a rotational force. Because of the rotational force, the door mirror main body is automatically rotated, via the rotational force transmitting mechanism, between a use position and a storage position. In this type of conventional vehicle outside mirror device, an upper edge portion of a rotation shaft, an upper edge portion of the motor base, and an upper edge portion of the gear cover are engaged in a triple engagement structure.

However, in the triple engagement structure, the motor base and the gear cover may not be firmly engaged with each other and thus they may cause jerky movements. Therefore, a fixation member such as a screw is additionally required to fix the motor base and the gear cover to prevent the movement between the motor base and the gear cover.

However, the use of the fixation member for fixing the motor base and the gear cover increases the cost of the vehicle outside door mirror device.

### SUMMARY OF THE INVENTION

It is an object of the present invention to at least partially solve the problems in the conventional technology.

According to an aspect of the present invention, there is provided a vehicle outside mirror device including a mirror assembly; an electronic unit; and a base configured to be attachable to a vehicle body. The electronic unit includes a shaft holder that is fixed to the base; a shaft that is fixed to the shaft holder; a casing that houses the mirror assembly and that is rotatably attached to the shaft, the casing including a gear case and a cover that are attached to each other; and a driving mechanism that is housed in the casing and that rotates the mirror assembly with respect to the shaft, the driving mechanism including a motor and a rotational force transmitting mechanism, the rotational force transmitting mechanism including a deceleration unit and a clutch unit. The deceleration unit is rotatably borne by a shaft bearing member, the gear case has an engagement portion with which the shaft bearing member engages so as not to be movable in a direction orthogonal to an axial direction of the shaft, and the gear case and the cover include a fixation portion that sandwiches the shaft bearing member in the axial direction of the shaft and fixes the shaft bearing member.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a schematic diagram of a vehicle outside mirror device according to an embodiment of the present invention;
Fig. 2 is an exploded perspective view of an electronic unit shown in Fig. 1;
Fig. 3 is a vertical cross section of the electronic unit;
Fig. 4 is a horizontal cross section of the electronic unit;
Fig. 5 is a bottom plan view of a gear case shown in Fig. 2;
Fig. 6 is a top view of the electronic unit without a cover shown in Fig. 2; and
Fig. 7 is a vertical cross section of the electronic folding unit in a state where a plate shown in Fig. 2 is fixed to the gear case and the cover.

### DETAILED DESCRIPTION OF THE PREFERRED EMBODIMENTS

Exemplary embodiments of the present invention are explained in detail below with reference to the accompanying drawings.

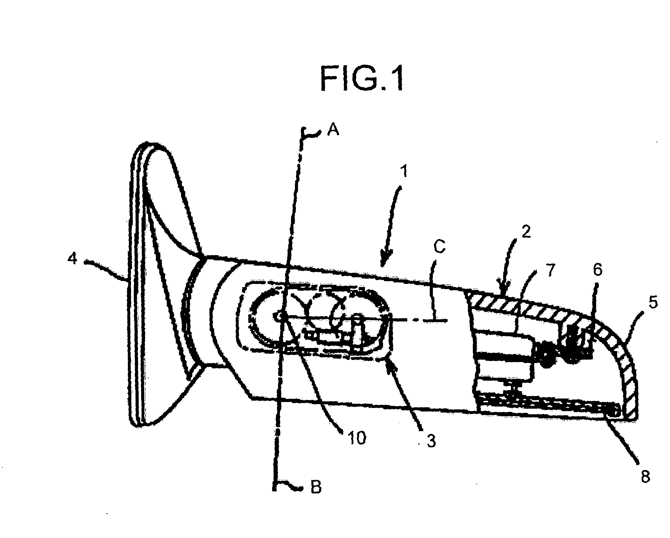

A vehicle outside mirror device 1 according to an embodiment of the present invention is explained in detail below. Fig. 1 is a schematic diagram of the vehicle outside mirror device 1. The vehicle outside mirror device 1 is an electronic door mirror device, and it is for attaching to a right door (not shown) of a vehicle (not shown). A vehicle outside mirror device for attaching to a left door basically has the same structure as that of the vehicle outside mirror device 1 except that it is for a left hand application.

As shown in Fig. 1, the vehicle outside mirror device 1 includes a mirror assembly 2, an electronic unit 3, and a base 4 (mirror base). The base 4 is fixed to the right door. The mirror assembly 2 is held by the base 4 in such a manner that the mirror assembly 2 is rotatable with respect to the right door.

The mirror assembly 2 includes a mirror housing 5, an attachment bracket 6, a power unit 7, and a mirror 8. The attachment bracket 6 is attached to an inner wall of the mirror housing 5. The power unit 7 is attached to the attachment bracket 6. The mirror 8 is movably attached to the power unit 7 so as to incline vertically and horizontally.

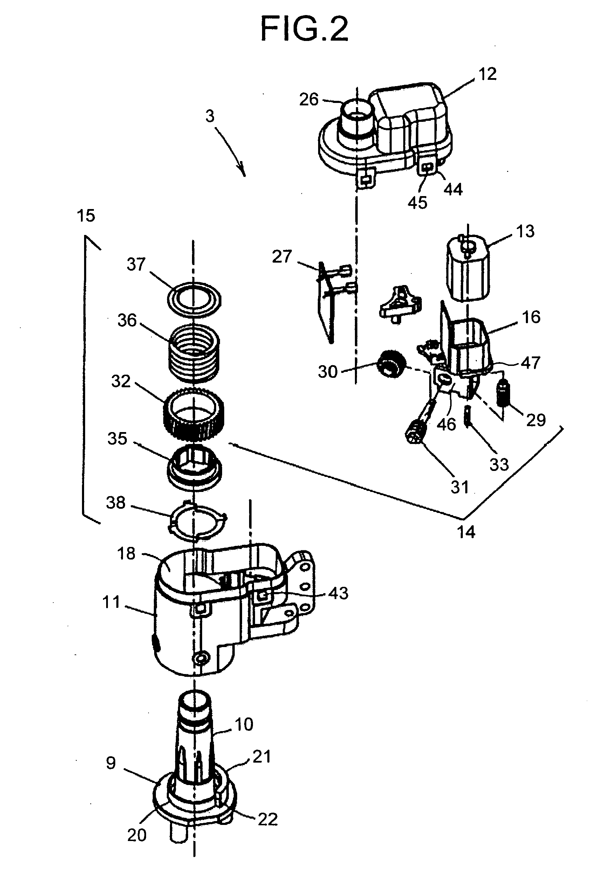

As shown in Fig. 2, the electronic unit 3 includes a shaft holder 9, a shaft 10, a gear case 11, a cover 12, a motor 13, a deceleration mechanism 14 as a torque transmission mechanism, a clutch mechanism 15, and a substrate 27. A shaft bearing portion 46 that is in the form of a protrusion is arranged on the plate 16. The deceleration mechanism 14 is rotatably borne by the shaft bearing portion 46 of the plate 16. The plate 16 and the deceleration mechanism 14 constitute a subassembly. A fixation portion 47 is also arranged on the plate 16.

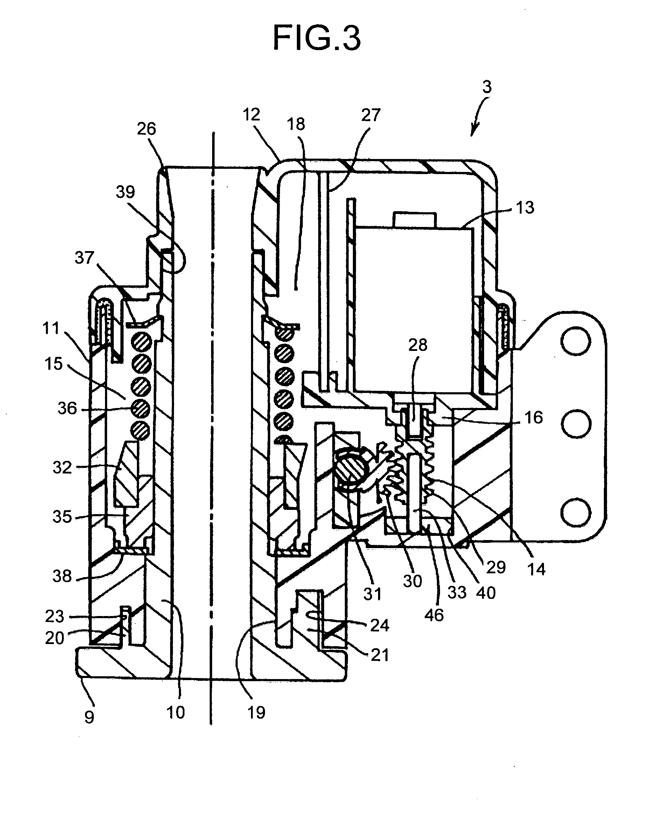

The shaft holder 9 is fixed to the base 4. The shaft 10 is integral with the shaft holder 9. The shaft 10 is hollow, and harnesses 44 are passed though the shaft 10 (see Fig. 3). The gear case 11 and the cover 12 are rotatably attached to the shaft 10. The gear case 11 is attached to the attachment bracket 6. The motor 13, the deceleration mechanism 14, the clutch mechanism 15, and the plate 16 are housed in the gear case 11.

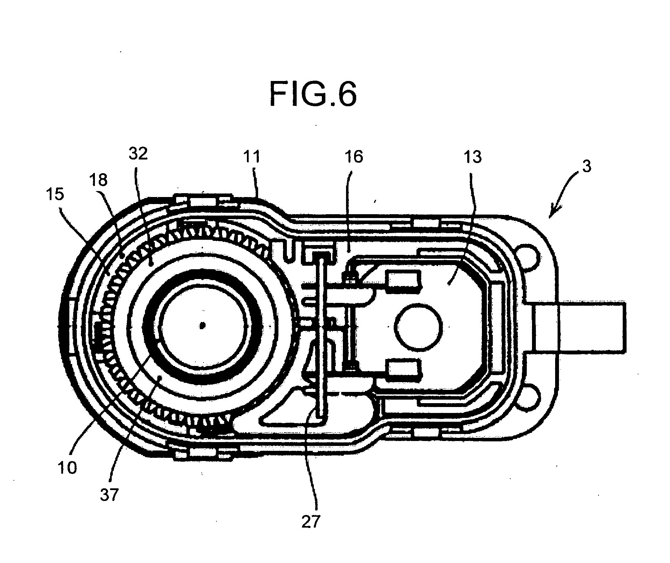

The gear case 11 is made of, for example, resin such as nylon. As shown in Figs. 2 to 7, a cross section of the gear case 11 has a concave shape, i.e., the gear case 11 has a closed portion on one side (bottom side) and an open portion on the other side (top side). In other words, the housing unit 18 having a cross section in a concave shape, i.e., the housing unit 18 having a closed portion on a side of the shaft holder 9 and an open portion on a side of the cover 12, is provided in the gear case 11. A circular insertion hole 19 is formed on the closed side of the gear case 11. The shaft 10 is inserted into the insertion hole 19 such that the gear case 11 is rotatable on the shaft 10.

The shaft 10 is positioned on one side of the housing unit 18, and an engagement portion 40 is provided on the other side of the housing unit 18. A vertical cross section of the engagement portion 40 has a concave shape, i.e., the engagement portion 40 has a closed portion on a side of the shaft holder 9 and an open portion on a side of the cover 12.

As shown in Figs. 3, 4, and 7, the shaft bearing portion 46 is engaged with the engagement portion 40 such that they are not movable in a direction orthogonal to the axial direction of the shaft 10. A fixation portion 41 that serves as a step is provided to a periphery of the open portion of the engagement portion 40. The fixation portion 41 can be provided to the entire periphery of the open portion of the engagement portion 40 or partly provided to the open portion of the engagement portion 40.

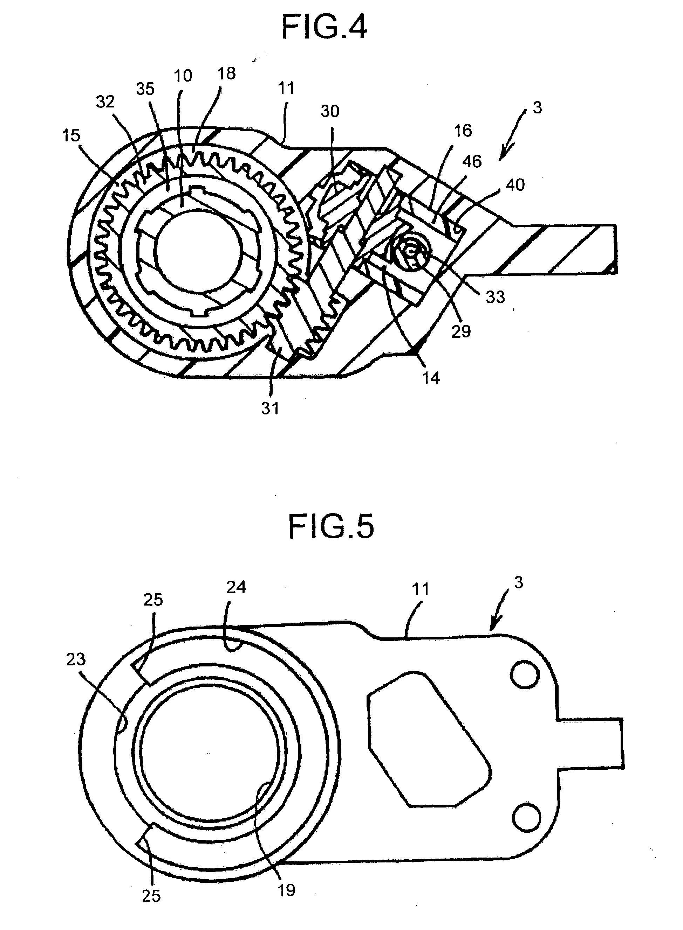

As shown in Figs. 2 and 3, a guide protruding portion 20 having an annular shape and that is concentric with the shaft 10 is provided integrally with an upper surface of the shaft holder 9. In addition, a stopper protruding portion 21 having an arc shape and that is concentric with the shaft 10 is provided integrally with an outer surface of the guide protruding portion 20. The stopper protruding portion 21 has stopper facets 22 on both ends. Only one of the stopper facets 22 is seen in Fig. 2 because the other stopper facet is behind the shaft 10. As shown in Figs. 3 and 5, a guide groove 23 having an annular shape and the same center axis as that of the shaft 10 is formed in a bottom surface of the gear case 11. In addition, a guide groove 24 having an arc shape and that is concentric with the shaft 10 is formed in the bottom surface of the gear case 11 in an outer position with respect to an outer circumference of the guide groove 23. In addition, stopper facets 25 are formed in the gear case 11 at both boundaries between the guide groove 23 and the guide groove 24.

The guide protruding portion 20 and the stopper protruding portion 21 are inserted into and fitted to the guide groove 23 and the guide groove 24. The guide groove 23, the guide groove 24, the guide protruding portion 20, and the stopper protruding portion 21 constitute a guide unit that guides the mirror assembly 2 to rotate with respect to the base 4.

When the mirror assembly 2 is rotated forward (i.e., clockwise) from a use position C shown in Fig. 1 to a storage position B shown in Fig. 1 or rotated backward (counterclockwise) from the use position C to a forward inclination position A shown in Fig. 1, the stopper facets 22 of the stopper protruding portion 21 abut with the stopper facets 25 of the gear case 11. The mirror assembly 2 can not be rotated further when the stopper facets 22 abut with the stopper facets 25, which prevents hitting of the mirror assembly 2 with the vehicle body. Thus, the guide groove 23, the guide groove 24, the guide protruding portion 20, and the stopper protruding portion 21 constitute a stopper unit that prevents hitting of the mirror assembly 2 with the vehicle body.

The cover 12 is made of resin. The cross section of the cover 12 has an inverted concave shape as shown in Figs. 2, 3, and 7, i.e., the cover 12 has a closed portion on one (top) side and an open portion on the other (bottom) side. In other words, the housing unit 18 having a cross section in an inverted concave shape, i.e., the housing unit 18 having a closed portion on one side and having an open portion on a side of the gear case 11, is provided to the cover 12. A fixation portion 42 that mates with the fixation portion 41 is provided to the periphery of the open portion of the housing unit 18 of the cover 12. The fixation portion 42 can have a rib-like shape or a sagging shape. As in the case of the fixation portion 41, the fixation portion 42 can be provided to the entire periphery of the open portion of the housing unit 18 of the cover 12 or partly provided to the open portion of the housing unit 18. A harness insertion cylindrical portion 26 that communicates with the shaft 10 is integrally mounted to the cover 12.

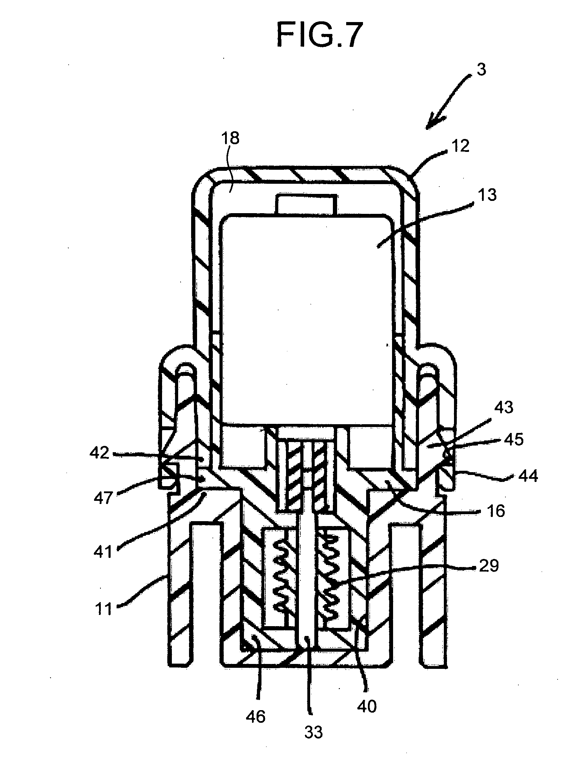

A periphery of the housing unit 18 of the gear case 11 and a periphery of the housing unit 18 of the cover 12 are engaged and fixed to each other. As shown in Figs. 2 and 7, a plurality of engagement claws 43 is integrally attached to the housing unit 18 of the gear case 11 in an outer position with respect to the periphery of the open portion of the housing unit 18 of the gear case 11. In addition, an elastic wall 44 having a downward facing U-like shape is integrally provided to the housing unit 18 of the cover 12 in an outer position with respect to the periphery of the open portion of the housing unit 18 of the gear case 11. A plurality of engagement holes 45 that mate with the engagement claws 43 is formed in the elastic wall 44. The engagement claws 43 of the gear case 11 and the engagement holes 45 of the elastic wall 44 of the cover 12 are engaged with each other via the elastic wall 44, so that the periphery of the open portion of the housing unit 18 of the gear case 11 and the periphery of the open portion of the housing of the cover 12 are attached to each other. As shown in Fig. 7, the fixation portion 47 of the plate 16 is sandwiched in the axial direction of the shaft 10 and fixed between the fixation portion 41 of the gear case 11 and the fixation portion 42 of the cover 12. Alternatively, for example, the gear case 11 and the cover 12 can be fixed to each other by adhering with an adhesive.

The substrate 27 is attached to the plate 16. A switch circuit that controls (drives and stops) the motor 13 is mounted on the substrate 27. An insertion hole 39 that communicates with the harness insertion cylindrical portion 26 is formed in the cover 12. The shaft 10 is inserted into the insertion hole 39. The cover 12 and the gear case 11 are rotatably attached to the shaft 10.

As shown in Figs. 2 to 4, the deceleration mechanism 14 and the clutch mechanism 15 are positioned between an output shaft 28 of the motor 13 and the shaft 10, and the deceleration mechanism 14 and the clutch mechanism 15 transmit a rotational force of the motor 13 to the shaft 10. The motor 13, the deceleration mechanism 14, and the clutch mechanism 15 rotate the mirror assembly 2 with respect to the shaft 10.

The deceleration mechanism 14 includes a first worm gear 29, i.e., a first gear, a helical gear 30, i.e., a second gear, and engages with the first worm gear 29, a second worm gear 31, i.e., a third gear, and a clutch gear 32, i.e., a last gear, and with which the second worm gear 31 is engaged.

The first worm gear 29 is rotatably borne by the plate 16 via a pin 33. The first worm gear 29 is connected to the output shaft 28. The helical gear 30 is rotatably bored by the plate 16. The second worm gear 31 is integrally and rotatably engaged with the helical gear 30 and rotatably borne by the gear case 11.

The clutch mechanism 15 includes the clutch gear 32 made of metal, a clutch holder 35 made of metal, a spring 36, a push nut 37, and a washer 38 made of metal. The washer 38, the clutch holder 35, the clutch gear 32, and the spring 36 are sequentially fitted to the shaft 10, and the push nut 37 is fixed to the shaft 10, so that the spring 36 is compressed by the push nut 37. The clutch gear 32 and the clutch holder 35 are engaged with each other such that they can be disengaged from each other. When the second worm gear 31 and the clutch gear 32 are engaged with each other, a rotational force of the motor 13 is transmitted to the shaft 10.

The clutch gear 32 and the clutch holder 35 constitute a clutch mechanism. The clutch gear 32 is attached to the shaft 10 so as to be rotatable and movable in a direction of an axis (hereinafter, "axial direction") of the shaft 10. The clutch holder 35 is attached to the shaft 10 so as not to be rotatable and so as to be movable in the axial direction of the shaft 10. As shown in Fig. 7, a plurality of, for example three, clutch protruding portions 40 are formed on a bottom surface of the clutch gear 32 and a plurality of, for example three, clutch recess portions 41 are formed in an upper surface of the clutch holder 35. The clutch protruding portions 40 are positioned at equal intervals on the bottom surface of the clutch gear 32 and the clutch recess portions 41 are positioned at equal intervals on the upper surface of the clutch holder 35. When an urging force of the spring 36 acts on the clutch gear 32, the clutch protruding portions 40 and the clutch recess portions 41 engage with each other. In other words, when the urging force of the spring 36 acts on the clutch gear 32, the clutch gear 32 and the clutch holder 35 are in an engaged state. On the other hand, when a force (external force) of a predetermined amount or more is applied to the mirror assembly 2 with, for example, hand, the clutch protruding portions 40 and the clutch recess portions 41 disengage from each other (released). In other words, when the predetermined force is applied to the mirror assembly 2, the clutch gear 32 and the clutch holder 35 disengaged from each other (released). When the clutch protruding portions and the clutch recess portions are engaged with each other, the clutch gear 32 and the clutch holder 35 are engaged with each other. On the other hand, when the clutch protruding portions and the clutch recess portions are disengaged from each other (released), the clutch gear 32 and the clutch holder 35 are disengaged from each other (released).

The clutch gear 32 is opposed to the spring 36 and the clutch holder 35 is opposed to the washer 38 and the gear case 11. The washer 38 is fixed to the gear case 11. The clutch holder 35 and the washer 38 include a rotation range regulating mechanism that regulates a range of automatic rotation of the mirror assembly 2 between the use position C and the storage position B. The mirror assembly 2 can be stopped at the storage position B not only because of the regulation by the automatic rotation range regulating mechanism but also because the stopper facets 25 of the gear case 11 make contact with the stopper facets 22 of the stopper protruding portion 21.

How the mirror assembly 2 is automatically rotated from the use position C to the storage position B is explained below. When the mirror assembly 2 is in the use position C, the clutch protruding portions 40 of the clutch gear 32 and the clutch recess portions 41 of the clutch holder 35 are engaged with each other as shown in Fig. 9, i.e., the clutch gear 32 and the clutch holder 35 are engaged with each other. Therefore, the clutch gear 32 is not rotatable on the shaft 10.

When the driver of the vehicle operates a switch (not shown) provided inside the vehicle in a state that the mirror assembly 2 is in the use position C, the motor 13 generates a rotational force. The rotational force of the motor 13 is transmitted via the output shaft 28 and the deceleration mechanism 14 to the clutch gear 32 that is fixed to the shaft 10. In this state, the clutch gear 32 is not rotatable on the shaft 10 together with the clutch holder 35. Therefore, the second worm gear 31 rotates on the clutch gear 32, and thus, the mirror assembly 2 rotates on the shaft 10. As a result, the mirror assembly 2 rotates clockwise from the use position C to the storage position B.

The shaft bearing portion 46 is engaged with the engagement portion 40 so as not to be movable in the direction orthogonal to the axial direction of the shaft 10. In addition, the fixation portion 47 of the plate 16 is sandwiched in the axial direction of the shaft 10 and fixed between the fixation portion 41 of the gear case 11 and the fixation portion 42 of the cover 12. Therefore, the plate 16 is fixed to the gear case 11 and the cover 12 so as not to be movable in the axial direction of the shaft 10. As a result, the rotational force transmitting mechanism can operate smoothly.

When the mirror assembly 2 rotates from the use position C to the storage position B clockwise, the gear case 11 rotates on the shaft 10 clockwise. When the mirror assembly 2 is positioned in the storage position B, a current supplied to the motor 13 (operation current) increases as a result of regulation by the automatic rotation range regulating mechanism. When the current reaches a predetermined value, the switch circuit operates to stop supply of the current to the motor 13. As a result, the mirror assembly 2 stops at the storage position B. When the mirror assembly 2 has reached the storage position B, the stopper facets 22 of the stopper protruding portion 21 make contact with the stopper facets 25 of the gear case 11. Therefore, the mirror assembly 2 can not rotate further, which prevents hitting of the mirror assembly 2 with the vehicle body.

How the mirror assembly 2 is automatically rotated from the storage position B to the use position C is explained below. When the driver operates the switch arranged inside the vehicle in a state that the mirror assembly is in the storage position B, the motor 13 generates a rotational force. Because of the rotational force of the motor 13, the gear case 11 rotates counterclockwise on the shaft 10, so that the mirror assembly 2 rotates counterclockwise from the storage position B. When the mirror assembly 2 reaches the use position C, the current (operation current) supplied to the motor 13 increases as a result of regulation by the automatic rotation range regulating mechanism. When the current reaches a predetermined value, the switch circuit operates to stop the supply of the current to the motor 13. As a result, the mirror assembly 2 stops at the storage position C.

How the mirror assembly 2 is manually rotated between the use position C and the storage position B is explained below. When manually rotating the mirror assembly 2 clockwise from the use position C to the storage position B or counterclockwise from the storage position B to the use position C, the driver pushes (or pulls) the mirror assembly 2 is a desired direction, i.e., the driver applies a force (external force) of a predetermined amount or more in a desired direction to the mirror assembly 2. The clutch recess portions are disengaged from the clutch protruding portions against the urging force of the spring 36. Thus, the clutch gear 32 is rotatable on the shaft 10 and rotates on the shaft 10 together with the second worm gear 31.

Because the clutch gear 32 rotates with the second worm gear 31 on the shaft 10, the mirror assembly 2 rotates on the shaft 10. In this manner, the mirror assembly 2 is manually rotated clockwise from the use position C to the storage position B or counterclockwise from the storage unit B to the use position C.

When manually rotating the mirror assembly 2 positioned in the use position C in the counterclockwise direction, the driver pushes (or pulls) the mirror assembly 2 in the counterclockwise direction. In this case, the clutch gear 32 and the clutch holder 35 are maintained not rotatable. Therefore, the clutch gear 32 and the clutch holder 35 move upward together against the urging force of the spring 36. In other words, the automatic rotation range regulating mechanism does not regulate the rotation of the mirror assembly 2. Thus, the mirror assembly 2 is rotated counterclockwise from the use position C to the forward inclination position A. When the mirror assembly 2 reaches the forward inclination position A, the stopper facets 22 of the stopper protruding portion 21 abut with the stopper facets 25 of the gear case 11. Therefore, the rotation of the mirror assembly 2 can not be rotated further, which prevents hitting of the mirror assembly 2 with the vehicle body.

When manually rotating the mirror assembly 2 positioned in the forward inclination position A in the clockwise direction, the driver pushes (or pulls) the mirror assembly 2 in the clockwise direction. As a result, the gear case 11 attached to the mirror assembly 2 rotates clockwise. Therefore, the mirror assembly 2 rotates clockwise from the forward inclination position A to the use position C. When the mirror assembly 2 reaches the use position C, the clutch gear 32 and the clutch holder 35 move downward as shown in Fig. 3 because of the urging force of the spring 36. Thus, the mirror assembly 2 stops at the use position C because of the regulation by the automatic rotation range regulating mechanism.

When a load of a predetermined amount or more is undesirably applied to the mirror assembly 2, clockwise or counterclockwise, the mirror assembly 2 rotates between the use position C and the storage position B or between the use position C and the forward inclination position A. Such motion buffers the applied force and prevents damage of the vehicle external mirror device 1.

Effects of the vehicle outside mirror device 1 are explained below. In this manner, the shaft bearing portion 46 of the plate 16 is engaged with the engagement portion 40 of the gear case 11 so as not to be movable in the direction orthogonal to the axial direction of the shaft 10, and the fixation portion 47 of the plate 16 is sandwiched in the axial direction of the shaft 10 and fixed between the fixation portion 41 of the gear case 11 and the fixation portion 42 of the cover 12. Therefore, it is possible to fix the plate 16 to the gear case 11 and the cover 12 without an additional fixation member, such as a screw, such that the plate 16 is not movable in the direction orthogonal to the axial direction of the shaft 10 and the axial direction of the shaft 10. In other words, in the vehicle outside mirror device 1, a fixation member is not required, i.e., an operation for attaching the fixation member is not required, which leads to cost reduction.

Furthermore, according to the embodiment, the adverse impacts by fasteners such as screws can be eliminated because the plate 16 of the mirror device 1 is firmly fixed to the gear case 11 and the cover 12 eliminating the use of the fastener. Specifically, there will be no more deformation of the plate 16 caused by an excessive force imposed thereon that impacts on the deceleration mechanism 14. As a result, there will be no more noise problem and the durability is ensured.

The vehicle outside mirror device 1 is an electronic foldable door mirror device. However, the same technology can be applied to other vehicle outside mirror devices such as vehicle fender mirrors.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A vehicle outside mirror device comprising:
a mirror assembly (2);
an electronic unit (3); and
a base (4) configured to be attachable to a vehicle body,
the electronic unit including
a shaft holder (9) that is fixed to the base;
a shaft (10) that is fixed to the shaft holder;
a casing (11, 12) that houses the mirror assembly and that is rotatably attached to the shaft, the casing including a gear case and a cover that are attached to each other; and
a driving mechanism that is housed in the casing and that rotates the mirror assembly with respect to the shaft, the driving mechanism including a motor (13) and a rotational force transmitting mechanism (14, 15), the rotational force transmitting mechanism including a deceleration unit (14) and a clutch unit (15), wherein
the deceleration unit is rotatably borne by a shaft bearing member (16),
the gear case has an engagement portion (40) with which the shaft bearing member engages so as not to be movable in a direction orthogonal to an axial direction of the shaft, and
the gear case and the cover include a fixation portion (41, 42) that sandwiches the shaft bearing member in the axial direction of the shaft and fixes the shaft bearing member.
